# EUROPÄISCHE PATENTSCHRIFT

(11) **EP 4 264 107 B1**
(45) Veröffentlichungstag und Bekanntmachung des Hinweises auf die Patenterteilung: **31.12.2025**
(21) Anmeldenummer: 21814700.7
(22) Anmeldetag: 10.11.2021
(51) Int. Cl.: F16L 37/14

(54) **STECKVERBINDER MIT VERIFIZIERUNGSELEMENT**
CONNECTOR WITH VERIFICATION ELEMENT
CONNECTEUR DOTÉ D'UN ÉLÉMENT DE VÉRIFICATION

(30) Priorität: 18.12.2020 DE 102020134230
(43) Veröffentlichungstag der Anmeldung: 25.10.2023
(73) Patentinhaber: NORMA Germany GmbH, 63477 Maintal (DE)
(72) Erfinder: MERLET, Laurent, 35580 GUICHEN (FR); GALLOU, Cedric, 35580 Guichen (FR); GAUDIN, Stéphane, 35580 GUICHEN (FR)
(74) Vertreter: Patentanwälte Olbricht Buchhold Keulertz
(86) Internationale Anmeldenummer: PCT/EP2021/081295
(87) Internationale Veröffentlichungsnummer: WO 2022/128266

(56) Entgegenhaltungen:
- WO-A1-2021/237261
- AT-A4- 523 066
- DE-A1- 102012 013 305
- US-A1- 2019 333 420
- US-A1- 2020 166 167

## Beschreibung

Die Erfindung betrifft einen Steckverbinder gemäß dem Oberbegriff von Anspruch 1 sowie ein Verfahren zur Herstellung und Verifizierung einer Steckverbindung gemäß Anspruch 5.

Steckverbindern sollen eine korrekte und dichte Verbindung zweier zu verbindender, fluidführender Bauteilen gewährleisten. Dazu gehören beispielsweise Stutzen insbesondere eines Vorratsbehälters oder einer Verbrauchsstelle, Rohre, Kanisteranschlüsse, eine andere Fluidleitung. Um eine sichere Montag beispielweise in der Kraftfahrzeugfertigung zu ermöglichen, ist eine schnelle und eindeutige Erkennung wichtig, ob eine Verbindung korrekt montiert wurde.

Hierfür werden üblicherweise Sicherheitsmerkmale am Steckverbinder vorgesehen, die eine einfache Kontrolle einer korrekten Verbindung ermöglichen sollen. Beispielweise kann es vorgesehen sein, dass eine Sicherheitsnadel bei oder nach der Betätigung eines Verriegelungselements zur Befestigung eines Steckers entfernt werden muss. Dies ermöglicht eine schnelle visuelle Prüfung, ob eine Verbindung hergestellt wurde, indem geprüft wird, ob die Sicherheitsnadel entfernt wurde oder noch vorhanden ist. Dennoch ist eine korrekte Verbindung bei der Montage mechanisch zu überprüfen, damit auch eine ausreichende Dichtigkeit gewährleistet werden kann.

Zudem ist es bekannt, eine farbliche Markierung vorzusehen, insbesondere in Form eines Punktes oder einer Linie, die nur sichtbar ist, wenn ein Stecker im Steckverbinder eingesetzt und befestigt ist.

Die US 2019/333420 A1 zeigt einen Schnellverbinder mit Dichungs- und Greifeinrichtungen, die geeignet sind, Toleranzen des anzuschließenden Schlauchs zu tolerieren ohne dabei undicht zu werden oder die Haltekräfte zu verringern. In einer besonderen Ausführungsform weist der Schnellverbinder einen RFID-Tag auf, um eine ordnungsgemäße Verbindung zu verifizieren.

Die US 2020/166167 A1 offenbart einen Schnellverbinder mit einem Indikator der anzeigt, dass die Verbindung vollständig eingerastet ist.

US 2012/024080 A1, DE 10 2018 219 440 A1, DE 10 2012 013 305 A1 und EP 3 736 481 A1 zeigen Verbinder mit Identifikationsmitteln des Standes der Technik.

Nachteilig bei dieser Art der Überprüfung ist, dass sie mechanisch oder visuell durch einen Techniker durchgeführt werden muss. Hierdurch sind diese Verfahren anfällig gegenüber menschlichen Fehlern.

Aufgabe der Erfindung ist es nun, die Nachteile des Standes der Technik zu beseitigen und einen Steckverbinder bereitzustellen, der eine schnelle und zuverlässige Erkennung einer korrekten Verbindung zwischen einem Steckverbinder und einem Stecker ermöglicht.

Hauptmerkmale der Erfindung sind im kennzeichnenden Teil von Anspruch 1 sowie in Anspruch 5 angegeben. Ausgestaltungen sind Gegenstand der Ansprüche 2 bis 4 und 6.

Die Erfindung betrifft einen Steckverbinder, umfassend ein Gehäuse, ein Verriegelungselement und ein Verifikationselement, wobei das Gehäuse einen Aufnahmeraum, einen Anschlussstutzen und einen fluiddurchströmbaren Kanal aufweist, wobei das Verriegelungselement zwischen einer offenen Position und einer befestigenden Position bewegbar ist, wobei in der offenen Position des Verriegelungselement ein Stecker in den Aufnahmeraum einführbar ist und in der befestigenden Position des Verriegelungselement ein in den Aufnahmeraum eingeführter Stecker durch das Verriegelungselement innerhalb des Aufnahmeraums befestigbar ist. Dabei ist das Verifikationselement in einer offenen Position des Verriegelungselements von diesem zumindest teilweise verdeckt und in einer befestigenden Position des Verriegelungselements auslesbar.

Der fluiddurchströmbare Kanal verbindet den Aufnahmeraum und den Anschlussstutzen miteinander.

Der Begriff Stecker wird hier für alle männlichen Verbindungselemente verwendet, die mittels Steckverbinder verbunden werden können, hierzu gehören beispielweise Zapfen und Stutzen.

Durch die erfindungsgemäße Bauweise wird das Verifikationselement nur dann auseichend weit sichtbar und somit auslesbar, wenn eine korrekte Verbindung zwischen Steckverbinder und Stecker erzielt wurde. Hierdurch kann schnell und sicher gewährleistet werden, dass eine korrekte Verbindung hergestellt wurde. Ist kein Stecker in dem Verbinder befestigt, verdeckt das Verriegelungselement das Verifikationselement zumindest teilweise. Dies bedeutet, dass das Verifikationselement zu diesem Zeitpunkt nicht auslesbar ist. Das Verriegelungselement befindet sich entsprechend in einer offenen Position.

Alternativ kann es baulich vorgesehen sein, dass das Verriegelungselement in einer offenen Position das Verifikationselement vollständig verdeckt.

Wird ein Stecker in den Steckverbinder eingeführt und das Verriegelungselement in die befestigende Position bewegt, wird der Stecker im Steckverbinder befestigt. Durch die Bewegung des Verriegelungselements wird das Verifikationselement freigegeben, insbesondere derart weit freigegeben, dass das Verifikationselement auslesbar ist.

In einer bevorzugten Ausführungsform weist der Anschlussstutzen eine Tannenbaumstruktur auf. Hierdurch ist ein Rohr einfach aufschiebbar. Der Begriff Rohr wird hier insbesondere für flexible Rohre aus einem extrudierten Kunststoff verwendet, kann aber auch durch ein nicht flexibles Rohr, einen Schlauch oder etwas Vergleichbares gebildet sein.

Vorzugsweise weist der Anschlussstutzen einen äußeren Dichtring in Form eines O-Rings auf, der insbesondere im Bereich der Tannenbaumstruktur angeordnet ist. Hierdurch wird eine zusätzliche Dichtigkeit zwischen Rohr und Anschlussstutzen gewährleistet.

Ein auf den Anschlussstutzen aufgeschobenen Rohr kann beispielweise zusätzlich oder alternativ mit Hilfe eines Spannelements, beispielsweise einer Schlauchsehelle oder dergleichen, festgehalten werden.

Vorzugsweise ist das Verifikationselement fest und nicht bewegbar mit dem Gehäuse verbunden, insbesondere form-, kraft oder stoffschlüssig. Hierdurch wird gewährleistet, dass keine Manipulationen vor oder bei Montage des Steckverbinders am Verifikationselement vorgenommen werden können.

Erfindungsgemäß ist das Verifikationselement auf einer Lasche angebracht, die in radialer Richtung zum Gehäuse vorsteht. Ein radiales Vorstehen der Lasche gegenüber dem Gehäuse ermöglicht eine einfache Erreichbarkeit der Lasche mit dem Verifikationselement, welches ein Auslesen des Verifikationselements erleichtert.

Vorzugsweise steht die Lasche im Wesentlichen senkrecht auf dem Gehäuse und somit auch insbesondere senkrecht zum Fluidkanal oder zu einer Längserstreckung des Gehäuses. Die Lasche ist dabei insbesondere auf einem Außenumfang des Gehäuses angeordnet.

Vorzugsweise ist das Verifikationselement auf einer Fläche der Lasche angeordnet, die in axiale Richtung des Gehäuses zeigt, insbesondere in Richtung des Verriegelungselements. Durch Bewegung des Verriegelungselements in radialer Richtung, kann ein Verifikationselement auf einer derartige angeordneten Lasche zumindest teilweise verdeckt oder offen vorliegen, je nach Position des Verriegelungselements.

Die Befestigung eines Steckers im Aufnahmeraum erfolgt vorzugsweise durch zwei Befestigungselemente, ein Rückhalteelement und ein Verriegelungselement. Eine erste Befestigung des Steckers im Steckverbinder erfolgt nach Einschieben des Steckers in den Aufnahmeraum durch ein Rückhalteelement, welches ein Zurückrutschen des Steckers verhindert. Das Rückhalteelement kann dabei beispielweise als sichelförmige oder ringförmige Lippe ausgebildet sein. Eine endgültige und stabile Befestigung erfolgt durch Schließen, insbesondere Herabdrücken, des Verriegelungselements. Das Verriegelungselement wechselwirkt dabei insbesondere mit dem Stecker, beispielweise durch Verrasten mit dem Stecker. Nach Befestigung des Steckers mit dem Verriegelungselement, verbleibt das Verriegelungselement in der befestigenden Position, wodurch das Verifikationselement dauerhaft auslesbar ist, insbesondere zumindest solange eine korrekte Befestigung durch das Verriegelungselement sichergestellt ist.

Vorzugsweise ist ein Stecker in dem Aufnahmeraum durch Verrasten des Verriegelungselement befestigbar. Eine Rastverbindung zwischen Verriegelungselement des Steckverbinders und einem in den Aufnahmeraum eingebrachten Stecker stellt eine einfache, kostengünstig herstellbare und sichere Befestigungsmöglichkeit dar. Nach Verrasten des Verriegelungselements und dadurch gekennzeichneter korrekter Montage des Steckers im Aufnahmeraum des Steckverbinders, ist das Verifikationselement auslesbar.

Insbesondere ist das Verriegelungselement erst in einer befestigenden Position dauerhaft anordnenbar, wenn ein Stecker korrekt im Aufnahmeraum des Steckverbinders angeordnet und befestigt ist. Solange der Stecker nicht korrekt montiert ist, kann das Verriegelungselement nicht in der befestigenden Position anhaltend positioniert werden. Eine dauerhafte Anordnung des Verriegelungselements in der befestigenden Position heißt, dass diese Position solange anhält, wie der Stecker im Steckverbinder korrekt befestigt ist. Ein Lösen des Steckverbinders vom Stecker beendet die dauerhafte Anordnung des Verriegelungselements in der befestigenden Position und das Verriegelungselement wird durch das Lösen wieder in die offene Position bewegt.

In einer bevorzugten Ausführungsform ist das Verriegelungselement zwischen der offenen Position und der befestigenden Position in radialer Richtung zum Gehäuse bewegbar. Insbesondere befindet sich das Verriegelungselement in einer offenen Position radial weiter entfernt vom Aufnahmeraum als in der befestigenden Position. Insbesondere ist das Verriegelungselement in der offenen Position zumindest teilweise weiter außerhalb des Gehäuses angeordnet, als in der befestigenden Position.

Vorzugsweise sind das Gehäuse und die Lasche mit dem Verifikationselement einteilig ausgebildet.

In einer alternativen Ausführungsform sind das Gehäuse und die Lasche mehrteilig ausgebildet und insbesondere miteinander verklebt, verschweißt oder verclipt.

Dabei ist das Verifikationselement vorzugsweise auf einer Lasche aufgebracht, die radial von einem Ring absteht, welcher insbesondere die Form eines Endes des Gehäuses aufweist. Insbesondere weist der Ring die Form des Gehäuses an dem Ende des Steckverbinders auf, an dem der Aufnahmeraum angeordnet ist. Insbesondere ist der Ring an dem Ende des Gehäuses, an dem der Aufnahmeraum angeordnet ist, mit dem Gehäuse verbunden. Vorzugsweise ist der Ring mit dem Ende des Gehäuses flächig verbunden.

Erfindungsgemäß ist das Verifikationselement maschinell auslesbar. Hierdurch können bei einer Überprüfung der korrekten Befestigung von Steckverbindern menschliche Fehler, aufgrund fehlerhaft ausgelesener Sicherheitsmerkmale, vermieden werden. Dadurch lässt sich auch eine automatisierte Überprüfung realisieren.

Weiter weist das Verifikationselement einen maschinell auslesbaren, auf optischen Informationen basierenden Barcode oder QR-Code auf. Unter einem Barcode ist dabei ein Strichcode zu verstehen. Ein QR-Code ist ein zweidimensionales Muster, welches auf Basis von optischen Unterschieden maschinell auslesbar ist und meist elektronisch mit zugeordneten Informationen verbunden oder verbindbar ist. Hierdurch kann ein Steckverbinder mit einem Verifikationselement einfach und preisgünstig hergestellt werden.

Der maschinell auslesbare Code des Verifikationselements ist ein 1D oder 2D Code.

Ein maschinelles Auslesen des Verifikationselements basierend auf optischen Informationen, kann beispielweise mit Hilfe eines Scanners erfolgen.

In einer bevorzugten Ausführungsform weist der Steckverbinder einen Griff auf, der insbesondere am Gehäuse oder am Verriegelungselement befestigt ist. Hierdurch wird die Montage und Handhabung des Steckverbinders erleichtert.

In einer bevorzugten Ausführungsform ist zumindest eine erste Dichtung, insbesondere in Form eines O-Rings, im Gehäuse innerhalb des Kanals angeordnet. Hierdurch wird die Dichtigkeit zwischen Steckverbinder und Stecker erhöht.

In einer bevorzugten Weiterbildung ist eine zweite Dichtung, insbesondere in Form eines O-Rings, im Gehäuse angeordnet. Insbesondere ist zwischen der ersten und zweiten Dichtung ein Abstandshalter angeordnet. Hierdurch wird die Dichtigkeit zwischen Steckverbinder und befestigten Stecker weiter verbessert. Zudem werden die Dichtungen durch den Abstandshalter in Position gehalten.

Vorzugsweise sind die Bauteile des Steckverbinders, insbesondere das Gehäuse und das Verriegelungselement sowie eine Lasche für das Verifikationselement, aus Kunststoff ausgebildet.

Die Erfindung betrifft zudem ein Verfahren zur Herstellung und Verifizierung einer Steckverbindung umfassend folgende Verfahrensschritte in genannter Reihenfolge:
- Bereitstellen eines erfindungsgemäßen Steckverbinders,
- Einführen eines Steckers in den Aufnahmeraum des Steckverbinders,
- Bewegung des Verriegelungselements von einer offenen Position in eine befestigende Position, wobei das Verriegelungselement in der befestigenden Position mit dem Stecker im Aufnahmeraum wechselwirkt und diesen im Aufnahmeraum befestigt,
- Überprüfung der Befestigung des Steckers im Aufnahmeraum durch Auslesen des Verifikationselements am Steckverbinder.

Durch die Bewegung der Verriegelungselementes von der offenen Position in die befestigende Position wird das Verifikationselement aus einer zumindest teilweise verdeckten Anordnung freigegeben und auslesbar. Sobald das Verriegelungselement mit dem Stecker wechselwirkt und diesen befestigt, verbleibt das Verriegelungselement anhaltend in der befestigenden Position, so dass das Verifikationselement bequem ausgelesen werden kann. Durch das Auslesen des freigelegten Verifikationselements wird sichergestellt, dass die Verbindung zwischen Steckverbinder und Stecker korrekt und anhaltend hergestellt wurde.

In einer bevorzugten Ausführungsform erfolgt das Auslesen des Verifikationselements maschinell. Dies reduziert die Wahrscheinlichkeit, dass Verbindungen durch menschliche Fehler fehlerhaft hergestellt und fälschlicherweise positiv verifiziert werden.

Die im Zusammenhang des Steckverbinders erläuterten Merkmale, Vorteile und Verfahrensschritte sind analog auf das Verfahren zur Herstellung einer Steckverbindung mit Hilfe des Steckverbinders übertragbar.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Perspektivische Ansicht eines Steckverbinders mit Verriegelungselement in offener Position,
- Fig. 2: Perspektivische Ansicht eines Steckverbinders mit Verriegelungselement in befestigender Position,
- Fig. 3: Längsschnitt eines Steckverbinders mit Verriegelungselement in offener Position,
- Fig. 4: Längsschnitt eines Steckverbinders mit Verriegelungselement in befestigender Position,
- Fig. 5: Explosionszeichnung eines Steckverbinders mit Verifikationselement in zweiteiliger Ausführungsform,
- Fig. 6: Perspektivische Ansicht eines Steckverbinder gemäß Figur 5.

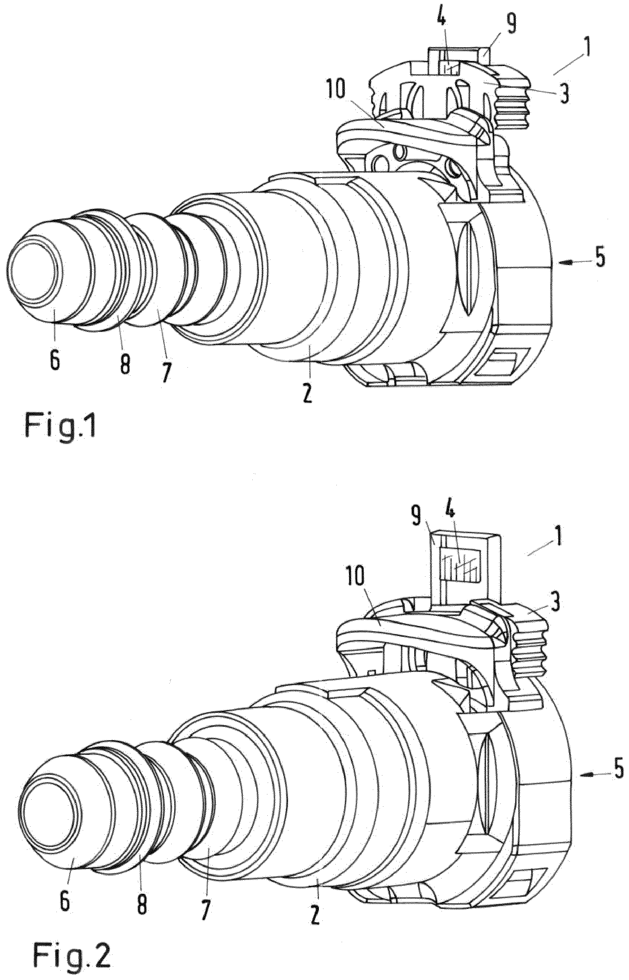

Fig. 1 zeigt eine perspektivische Ansicht eines Steckverbinders 1 mit einem Gehäuse 2 und einem Verriegelungselement 3, welches sich in offener Position befindet und ein Verifikationselement 4 zumindest teilweise verdeckt. Das Gehäuse 2 weist einen Aufnahmeraum 5 und einen Anschlussstutzen 6 auf. In der beispielhaft gezeigten Ausführungsform weist der Anschlussstutzen 6 eine Tannenbaumstruktur 7 auf, auf der eine äußere Dichtung in Form eines O-Rings angebracht ist.

Das Verifikationselement 4 ist in Form eines optisch auslesbaren Codes auf einer Lasche 9 angebracht, die in radialer Richtung gegenüber dem Gehäuse 2 vorsteht. Insbesondere ist das Verifikationselement 4 auf einer Fläche der Lasche 9 angeordnet, die in axialer Richtung des Gehäuses 2 und somit parallel zu einer Längsstreckung des Gehäuses 2 ausgerichtet ist und in Richtung des Verriegelungselements 3 zeigt. In der gezeigten Ausführungsform besteht der Code aus einem QR-Code.

Ein Griff 10 zur einfacheren Handhabung ist mit dem Gehäuse 2 verbunden.

Fig. 2 zeigt eine perspektivische Ansicht eines Steckverbinders 1 mit Verriegelungselement 3 in der befestigenden Position. Wird das Verriegelungselement 3 von der in Fig. 1 dargestellten offenen Position nach unten gedrückt, in radialer Richtung des Gehäuses, hin zum Aufnahmeraum, kann ein Stecker im Aufnahmeraum befestigt werden. Gleichzeitig wird das Verifikationselement 3 freigelegt. Diese befestigende Position des Verriegelungselements wird durch Wechselwirkung des Verriegelungselements mit einem nicht dargestellten Stecker anhaltend ermöglicht, so dass das Verifikationselement zur Überprüfung einer korrekten Befestigung ausgelesen werden kann. In der befestigenden Position des Verriegelungselements 3 ist somit das Verifikationselement 4 auslesbar.

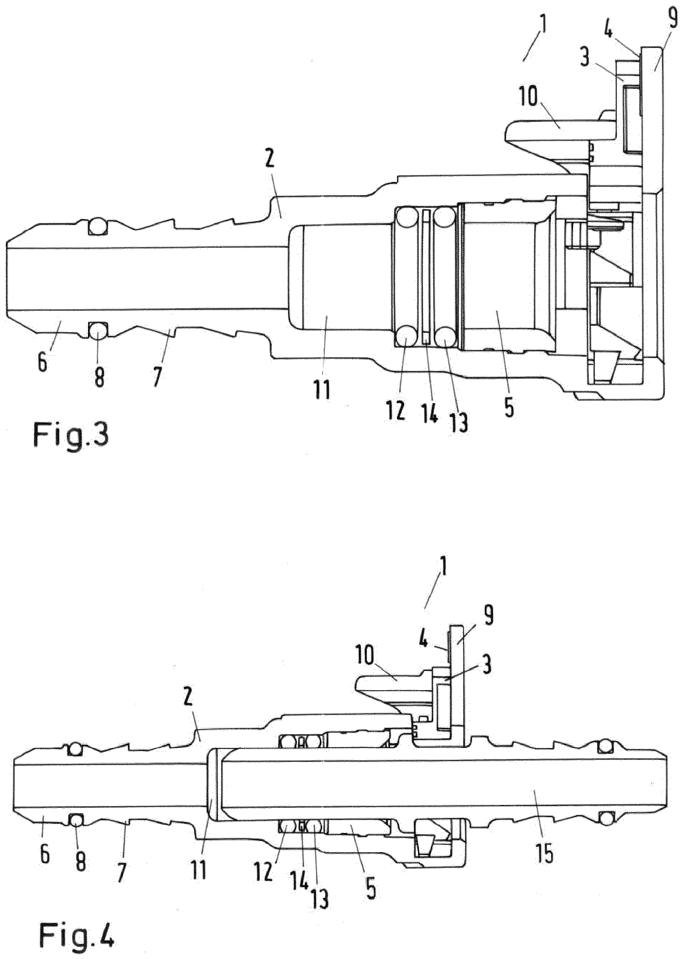

Fig. 3 zeigt einen Längsschnitt eines Steckverbinders 1, wobei sich das Verriegelungselement in einer offenen Position befindet und das Verifikationselement 4 auf der Lasche 9 zumindest teilweise verdeckt, insbesondere soweit verdeckt, dass dieses nicht auslesbar ist.

Das Gehäuse weist neben dem Aufnahmeraum 5 und dem Anschlussstutzen 6, einen fluiddurchströmbaren Kanal 11 auf, welcher den Aufnahmeraum 5 und den Anschlussstutzen 6 miteinander verbindet. Aufnahmeraum 5, Anschlussstutzen 6 und Kanal 11 sind fluiddurchströmbar miteinander verbunden.

Im Aufnahmeraum 5 sind eine erste und eine zweite Dichtung 12, 13 vorgesehen, insbesondere in Form von O-Ringen, welche durch einen Abstandshalter 14 voneinander beabstandet sind.

Fig. 4 zeigt ebenfalls einen Längsschnitt eines Steckverbinders 1, allerdings im Gegensatz zu Fig. 3 mit Verriegelungselement in befestigender Position. Hierbei ist ein Stecker 15 in den Aufnahmeraum 5 eingeschoben. Durch Bewegung des Verriegelungselements 3 in radialer Richtung wechselwirkt dieses mit dem Stecker 15, insbesondere verrastet mit dem Stecker 15. Dadurch wird der Stecker sicher und dicht im Aufnahmeraum 5 des Steckverbinders 1 befestigt und zugleich das Verriegelungselement 3 in der befestigenden Position fixiert. In der befestigenden Position des Verriegelungselements 3 wird das Verifikationselement 4 nicht mehr von diesem verdeckt und ist nun auslesbar. Hierdurch lässt sich eine Befestigung des Steckers 15 im Steckverbinder 1 einfach verifizieren.

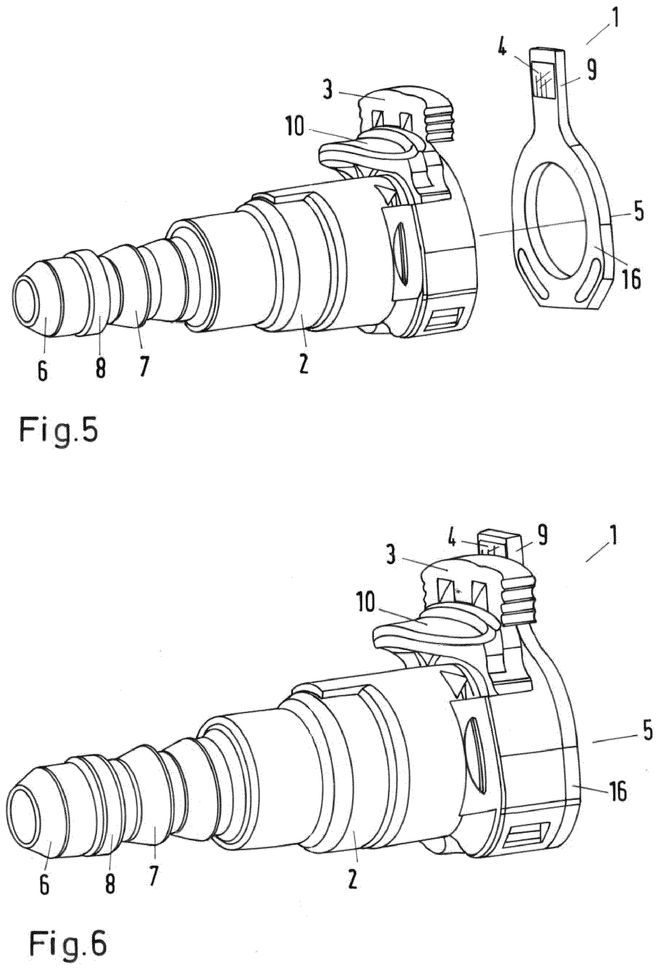

Fig. 5 zeigt eines Explosionszeichnung eines Steckverbinders 1 gemäß Fig. 6. Dabei werden das Gehäuse 2 und die Lasche 9 separat voneinander hergestellt und insbesondere miteinander verklebt, verschweißt oder verclipt. Das Verriegelungselement 3 befindet sich in

Fig. 5 und 6 in einer offenen Position, wodurch das Verifikationselement 4 zumindest teilweise verdeckt und insbesondere nicht maschinell auslesbar ist.

Wie in Fig. 5 sichtbar, ist das Verifikationselement in dieser Ausführungsform auf einer Lasche aufgebracht, die radial von einem Ring 16 absteht, welcher insbesondere die Form des Gehäuses 2 an dem Ende des Steckverbinders 1 aufweist, an dem der Aufnahmeraum 5 angeordnet ist. Der Ring 16 ist, wie in Fig. 6 gezeigt, an dem Ende des Gehäuses 2, an dem der Aufnahmeraum 5 angeordnet ist, mit dem Gehäuse 2 verbunden.

Die Erfindung ist nicht auf eine der vorbeschriebenen Ausführungsformen beschränkt, sondern in vielfältiger Weise im Rahmen der Ansprüche abwandelbar.

### Bezugszeichenliste

- 1: Steckverbinder
- 2: Gehäuse
- 3: Verriegelungselement
- 4: Verifikationselement
- 5: Aufnahmeraum
- 6: Anschlussstutzen
- 7: Tannenbaumstruktur
- 8: äußere Dichtung
- 9: Lasche
- 10: Griff
- 11: Kanal
- 12: erste Dichtung
- 13: zweite Dichtung
- 14: Abstandshalter
- 15: Stecker
- 16: Ring

## Patentansprüche

1. Steckverbinder (1) umfassend ein Gehäuse (2), ein Verriegelungselement (3) und ein Verifikationselement (4), wobei das Gehäuse einen Aufnahmeraum (5), einen Anschlussstutzen (6) und einen fluiddurchströmbaren Kanal (11) aufweist, wobei das Verriegelungselement (3) zwischen einer offenen Position und einer befestigenden Position bewegbar ist, wobei in der offenen Position des Verriegelungselements (3) ein Stecker in den Aufnahmeraum (5) einführbar ist und in der befestigenden Position des Verriegelungselements (3) der in den Aufnahmeraum (5) eingeführte Stecker durch das Verriegelungselement (3) innerhalb des Aufnahmeraums (5) befestigbar ist, wobei das Verifikationselement (4) in der offenen Position des Verriegelungselements (3) von diesem zumindest teilweise verdeckt ist und in der befestigenden Position des Verriegelungselements (3) auslesbar ist, wobei das Verifikationselement (4) auf einer Lasche (9) angebracht ist, die in radialer Richtung zum Gehäuse (2) vorsteht, **dadurch gekennzeichnet, dass** das Verifikationselement (4) einen maschinell auslesbaren auf optischen Informationen basierenden Barcode oder QR-Code aufweist.

2. Steckverbinder (1) nach Anspruch 1, **dadurch gekennzeichnet, dass** ein Stecker im Aufnahmeraum (5) durch ein Verrasten des Verriegelungselements befestigbar ist.

3. Steckverbinder (1) nach einem der vorhergehenden Ansprüche, **dadurch gekennzeichnet, dass** das Verriegelungselement (3) zwischen der offenen Position und der befestigenden Position in radialer Richtung zum Gehäuse (2) bewegbar ist.

4. Steckverbinder (1) nach einem der vorhergehenden Ansprüche, **dadurch gekennzeichnet, dass** das Gehäuse (2) und eine Lasche (9) mit dem Verifikationselement (4) einteilig ausgebildet sind.

5. Verfahren zur Herstellung und Verifizierung einer Steckverbindung umfassend folgende Verfahrensschritte in genannter Reihenfolge:
• Bereitstellen eines Steckverbinders (1) gemäß Anspruch 1,
• Einführen eines Steckers (15) in den Aufnahmeraum (5) des Steckverbinders (1),
• Bewegung des Verriegelungselements (3) von einer offenen Position in eine befestigende Position, wobei das Verriegelungselement (3) in der befestigenden Position mit dem Stecker (15) im Aufnahmeraum (5) wechselwirkt und diesen im Aufnahmeraum (5) befestigt,
• Überprüfung der Befestigung des Steckers (15) im Aufnahmeraum (5) durch Auslesen des Verifikationselements (4) am Steckverbinder (1).

6. Verfahren nach Anspruch 5, **dadurch gekennzeichnet, dass** das Auslesen des Verifikationselements (4) maschinell erfolgt.

## Claims

1. Plug connector (1), comprising a housing (2), a locking element (3) and a verification element (4), wherein the housing has a receiving space (5), a connection piece (6) and a duct (11) through which fluid can flow, wherein the locking element (3) is movable between an open position and a fastening position, wherein in the open position of the locking element (3) a plug can be inserted into the receiving space (5) and in the fastening position of the locking element (3) the plug inserted into the receiving space (5) can be fastened by the locking element (3) within the receiving space (5), wherein the verification element (4) in the open position of the locking element (3) is at least partially covered by the latter and in the fastening position of the locking element (3) is readable, wherein the verification element (4) is mounted on a tab (9) which protrudes in the radial direction toward the housing (2), **characterized in that** the verification element (4) has a machine-readable barcode or QR code based on optical information.

2. Plug connector (1) according to Claim 1, **characterized in that** a plug is fastenable in the receiving space (5) by a latching of the locking element.

3. Plug connector (1) according to either of the preceding claims, **characterized in that** the locking element (3) is movable between the open position and the fastening position in a radial direction toward the housing (2).

4. Plug connector (1) according to one of the preceding claims, **characterized in that** the housing (2) and a tab (9) are formed in one piece with the verification element (4).

5. Method for producing and verifying a plug connection comprising the following method steps in the stated order:
• providing a plug connector (1) according to Claim 1,
• inserting a plug (15) into the receiving space (5) of the plug connector (1),
• moving the locking element (3) from an open position into a fastening position, wherein the locking element (3) in the fastening position interacts with the plug (15) in the receiving space (5) and fastens it in the receiving space (5),
• checking the fastening of the plug (15) in the receiving space (5) by reading the verification element (4) on the plug connector (1).

6. Method according to Claim 5, **characterized in that** the verification element (4) is machine read.

## Revendications

1. Connecteur enfichable (1) comprenant un boîtier (2), un élément de verrouillage (3) et un élément de vérification (4), le boîtier présentant un espace de réception (5), une pièce de raccordement (6) et un canal (11) à travers lequel un fluide peut s'écouler, l'élément de verrouillage (3) étant mobile entre une position ouverte et une position de fixation, dans lequel, dans la position ouverte de l'élément de verrouillage (3), un connecteur peut être inséré dans l'espace de réception (5) et, dans la position de fixation de l'élément de verrouillage (3), le connecteur inséré dans l'espace de réception (5) peut être fixé par l'élément de verrouillage (3) dans l'espace de réception (5), l'élément de vérification (4) étant au moins partiellement recouvert par l'élément de verrouillage (3) dans sa position ouverte et pouvant être lu dans la position de fixation de l'élément de verrouillage (3), l'élément de vérification (4) étant fixé sur une languette (9) faisant saillie radialement par rapport au boîtier (2), **caractérisé en ce que** l'élément de vérification (4) présente un code à barres ou un code QR lisible par machines à base d'informations optiques.

2. Connecteur enfichable (1) selon la revendication 1, **caractérisé en ce qu'**un connecteur peut être fixé dans l'espace de réception (5) par encliquetage de l'élément de verrouillage.

3. Connecteur enfichable (1) selon l'une des revendications précédentes, **caractérisé en ce que** l'élément de verrouillage (3) est mobile entre la position ouverte et la position de fixation dans la direction radiale par rapport au boîtier (2).

4. Connecteur enfichable (1) selon l'une des revendications précédentes, **caractérisé en ce que** le boîtier (2) et une languette (9) sont réalisés d'une seul tenant avec l'élément de vérification (4).

5. Procédé de fabrication et de vérification d'une connexion enfichable, comprenant les étapes suivantes selon ladite séquence :
• fourniture d'un connecteur enfichable (1) selon la revendication 1,
• insertion d'un connecteur (15) dans l'espace de réception (5) du connecteur enfichable (1),
• déplacement de l'élément de verrouillage (3) d'une position ouverte à une position de fixation, l'élément de verrouillage (3) coopérant, dans la position de fixation, avec le connecteur (15) dans l'espace de réception (5) et le fixant dans l'espace de réception (5),
• vérification de la fixation du connecteur (15) dans l'espace de réception (5) par lecture de l'élément de vérification (4) sur le connecteur (1).

6. Procédé selon la revendication 5, **caractérisé en ce que** l'élément de vérification (4) est lu par machine.
